# EUROPÄISCHE PATENTANMELDUNG

(11) **EP 0 665 421 A1**
(43) Veröffentlichungstag der Anmeldung: **02.08.1995**
(21) Anmeldenummer: 95100898.6
(22) Anmeldetag: 24.01.1995
(51) Int. Cl.: G01G 11/00, G01G 19/03

(54) **Stückgutförderer (Sorter) zum Sortieren von Stückgutteilen**

(30) Priorität: 26.01.1994 DE 4402110
(71) Anmelder: Bernhard Beumer Maschinenfabrik KG, D-59269 Beckum (DE)
(72) Erfinder: Arlt, Günther, D-33378 Rheda-Wiedenbrück (DE); van Essen, Josef, D-48324 Sendenhorst (DE); Lutterbeck, Werner, D-59269 Beckum (DE)
(74) Vertreter: Hoormann, Walter, Dr.-Ing.

(57) **Zusammenfassung**

Stückgutförderer (Sorter) (1) zum Sortieren von codierten Stückgutteilen, mit einem angetriebenen, endlosen Förderstrang (8), der aus einer Vielzahl von gelenkig miteinander verbundenen, längs einer Führung (11) beweglichen Förderelementen (9) besteht, die jeweils ein über eine Stützeinrichtung (10) an der Führung (11) abgestütztes Tragelement (12) mit einer im Förderzustand im wesentlichen horizontalen Tragfläche (13) für ein Stückgutteil aufweisen, welches an einer vorgegebenen Abgabestelle (7) von mehreren längs der Förderstrecke vorhandenen Abgabestellen (7) z. B. durch seitliches Kippen des Tragelementes (12) abzugeben ist; mit mehreren Aufgabestellen (2), an welchen zu sortierende Stückgutteile jeweils einzeln auf die Tragfläche (13) eines freien Förderelementes (9) aufzugeben sind; und mit einem Rechner, dem die von einer Leseeinrichtung gelesenen Codeinformationen der aufgegebenen Stückguteile zugeleitet werden, wobei die Tragelemente (12) jeweils aus ihrer normalen Transportstellung relativ zu ihrer Stützeinrichtung (10) nach oben in eine Wiegestellung beweglich sind; daß dem Förderstrang (8) vor der ersten Abgabestelle (2) eine aus n elektrischen Waagen (14) bestehende, ortsfeste Wiegeeinrichtung (6) zugeordnet ist; daß die Waagen (14) jeweils eine Wiegestrecke (w) aufweisen, die länger ist als der Teilungsabstand (t) zwischen zwei einander benachbarten Förderelementen (9); und daß der Förderstrang (8) aus aufeinander folgenden Gruppen von jeweils n Förderelementen (9.1 - 9.4) besteht, von denen das erste Förderelement (9.1) jeder Gruppe nur mit einer ersten Waage (14.1), das zweite Förderelement (9.2) nur mit einer zweiten Waage (14.2) etc. und das n-te Förderelement (9.4) nur mit der n-ten Waage (14.4) der Wiegeeinrichtung (6) in wiegetechnischen Eingriff kommt, während die Förderelemente (9) jeweils an den anderen Waagen (14) der Wiegeeinrichtung (6) frei durchlaufen.

## Beschreibung

Die Erfindung betrifft einen auch als Sorter bezeichneten Stückgutförderer zum Sortieren von codierten Stückgutteilen, mit einem angetriebenen, endlosen Förderstrang, der aus einer Vielzahl von gelenkig miteinander verbundenen, längs einer Führung beweglichen Förderelementen besteht, die jeweils ein über eine Stützeinrichtung an der Führung abgestütztes Tragelement mit einer im Förderzustand im wesentlichen horizontalen Tragfläche für ein Stückgutteil aufweisen, welches an einer vorgegebenen Abgabestelle von mehreren längs der Förderstrecke vorhandenen Abgabestellen z. B. durch seitliches Kippen des Tragelementes abzugeben ist;
mit mehreren Aufgabestellen, an welchen zu sortierende Stückgutteile jeweils einzeln auf die Tragfläche eines freien Förderelementes aufzugeben sind; und mit einem Rechner, dem die von einer Leseeinrichtung gelesenen Codeinformationen der aufgegebenen Stückgutteile zur Verarbeitung zugeleitet werden.

Derartige Sorter sind in unterschiedlichen Ausgestaltungen bekannt und werden z. B. zum Sortieren von Paketen bei der Post oder zum Sortieren von Gepäckstücken auf Flughäfen aber auch für zahlreiche weitere Einsatzfälle umfänglich verwendet, um die im allgemeinen an einer Vielzahl von Aufgabestellen von Hand oder mittels einer Aufgabevorrichtung auf den Sorter aufgegebenen Stückgutteile jeweils einer als Zielstelle vorgegebenen Abgabestelle zuzuführen. Die Stückgutteile weren vor ihrer Aufgabe auf den Sorter mit einer von einer am Sorter angeordneten Leseeinrichtung lesbaren Codierung (z. B. einem Barcode) versehen, die u. a. eine Information für die vorgesehene Zielstelle enthält und im Zusammenwirken mit einem Rechner und einer entsprechenden Steuerung ermöglicht, daß das Stückgutteil an der vorgesehenen Abgabestelle abgegeben wird, nachdem die Codierung von der Leseeinrichtung gelesen, ein entsprechendes Signal an den Rechner gegeben und in diesem verarbeitet worden ist, und der Rechner eine entsprechende Information an die Steuerung gegeben hat, die eine Abgabe des Stückgutteils an der vorgegebenen Abgabestelle auslöst.

Bei verschiedenen Einsatzfällen von Sortern ist man daran interessiert, das jeweilige Gewicht der zu sortierenden Stückgutteile zu ermitteln und diese Information zwecks weiterer Verwertung dem Rechner zuzuleiten. Eine Gewichtsermitlung kann bspw. mittels einer jeder Aufgabestelle vorgeordneten elektrischen Waage erfolgen, doch ist eine derartige Arbeitsweise insbesondere bei einer großen Anzahl von Aufgabestellen außerordentlich unwirtschaftlich, da eine entsprechende Anzahl von Waagen benötigt wird. Außerdem ist eine Verwiegung der Stückgutteile vor deren Aufgabe auf den Sorter häufig nicht nur wirtschaftlich, sondern auch technisch problematisch. Dieses ergibt sich u. a. daraus, daß moderne Sorter zur Schaffung einer hohen Durchsatzleistung Fördergeschwindigkeiten bis zu 2 m/s aufweisen, und demgemäß im allgemeinen auch mit entsprechend schnell arbeitenden Aufgabevorrichtungen beschickt werden, um die Sorterkapazität nutzen zu können. Würde man dabei z. B. jeweils in die Aufgabevorrichtung eine Durchlaufwaage integrieren, so würde dieses zu einer nicht akzeptablen Verlängerung der Aufgabeförderer führen, da eine bestimmte Verweilzeit auf der Waage erforderlich ist, um das Stückgutgewicht mit hinreichender Genauigkeit bestimmen zu können. Hierdurch würde sich aber auch die Aufgabekapazität der Aufgabevorrichtung zwangsläufig verringern, weil ein Stückgutteil die Durchlaufwaage verlassen haben muß, bevor das nächste Stückgutteil auf die Waage gelangt. Häufig werden jeweils mit einer Wiegestation kombinierte Aufgabevorrichtungen selbst für schnellaufende moderne Sorter wegen der gewünschten Gewichtsermittlung der Stückgutteile vorgesehen, obwohl man die Beschickung an sich auch mit einer entsprechenden Anzahl von Handaufgabestellen durchführen könnte.

Unter wirtschaftlichen Gesichtspunkten scheint sich für eine Gewichtsermittlung der Stückgutteile die Lösung anzubieten, am Förderstrang des Sorters zwischen der letzten Aufgabestelle und der ersten Abgabestelle eine ortsfeste Durchlaufwaage anzuordnen, da man dann unabhängig von der Anzahl der Aufgabestellen mit einer einzigen Wiegeeinrichtung auskommt, wie dieses in der GB 21 26 356 A bereits für einen gattungsfremden Sorter zum Sortieren von Früchten und Gemüse vorgeschlagen worden ist. Eine solche Ausgestaltung ist jedoch allenfalls für sehr langsam laufende Sorter praktikabel und scheidet insbesondere für moderne Hochgeschwindigkeitssorter aus, weil die Wiegestrecke bei einer solchen Ausbildung nur sehr kurz sein kann, da die Waage jeweils nur das Gewicht eines Tragelementes mit dem darauf abgestützten Stückgutteil erfassen darf, das unmittelbar nachfolgende Förderelement also während des Wiegevorgangs noch nicht in die Wiegestrecke einlaufen darf, andererseits aber auch dessen Gewichtsbestimmung möglich sein muß. Mit einer derart kurzen Wiegestrecke ist insbesondere bei schnellaufenden Sorter eine genaue Gewichtsbestimmung nicht möglich.

Der vorliegenden Erfindung liegt die Aufgabe zugrunde, einen insbesondere eine größere Anzahl von Aufgabestellen aufweisenden Sorter der eingangs beschriebenen Gattung so auszubilden, daß das jeweilige Gewicht der zu sortierenden Stückgutteile in technisch und wirtschaftlich befriedigender Weise mit hinreichender Genauigkeit zu erfassen ist.

Die Lösung dieser Aufgabe ist erfindungsgemäß dadurch gekennzeichnet, daß die Tragelemente jeweils aus ihrer normalen Transportstellung relativ zu ihrer Stützeinrichtung nach oben in eine Wiegestellung beweglich sind; daß dem Förderstrang vor der ersten Abgabestelle eine aus n elektrischen Waagen bestehende, ortsfeste Wiegeeinrichtung zugeordnet ist; daß die Waagen jeweils eine Wiegestrecke w aufweisen, die länger ist als der Teilungsabstand t zwischen zwei einander benachbarten Förderelementen; und daß der Förderstrang aus aufeinander folgenden Gruppen von jeweils n Förderelementen besteht, von denen das erste Förderelement jeder Gruppe nur mit einer ersten Waage, das zweite Förderelement nur mit einer zweiten Waage etc. und das n-te Förderelement nur mit der n-ten Waage der Wiegeeinrichtung in wiegetechnischen Eingriff kommt, wahrend die Förderelemente jeweils an den anderen Waagen der Wiegeeinrichtung frei durchlaufen.

Die Länge der Wiegestrecke jeder Waage ist bevorzugt gleich dem Mehrfachen des Teilungsabstandes der Förderelemente, um eine ausreichend große Beruhigungsstrecke sowie eine hinreichend große Meßstrecke zum Verwiegen zur Verfügung zu haben. Dabei geht man zweckmäßigerweise so vor, daß man - abhängig von der Fördergeschwindigkeit des Sorters und der vorgegebenen Verweilzeit eines Stückgutteils auf der Waage - zunächst die Länge der gewünschten Wiegestrecke vorgibt bzw. ermittelt, diesen Wert durch den Teilungsabstand der Förderelemente teilt, und hieraus (ggf. unter entsprechender Aufrundung) den (ganzzahligen) Wert n ermittelt, der die Anzahl der Waagen der Wiegeeinrichtung und die Anzahl der Förderelemente je Gruppe von Förderelementen bestimmt.

Die einzelnen Waagen der Wiegeeinrichtung sind bevorzugt als Bandwaagen mit jeweils zwei mit gegenseitigem Horizontalabstand in einem Rahmen angeordneten, synchron zum Förderstrang angetriebenen Riemenförderern ausgebildet, deren endlose Riemen jeweils in einer vertikalen Ebene umlaufen, und die so angeordnet sind, daß ihr Obertrum nach oben über den mit einer Wiegeeinheit verbundenen Rahmen frei vorsteht.

Bei einer ersten Ausgestaltung dieser Art sind die Tragelemente jeweils an ihrer Unterseite mit zwei bevorzugt als Kufen ausgebildeten Führungen zur Aufnahme der Riemen der Riemenförderer der ihnen jeweils zugeordneten Waage versehen, die so weit nach unten vorstehen, daß das Tragelement beim Passieren der ihm zugeordneten Waage auf deren Riemenförderer aufläuft und in relativ zu seiner Stützeinrichtung angehobener Wiegestellung von diesen getragen wird, wobei die Führungen jedes Tragelementes jeder Gruppe von Tragelementen zu den Führungen der übrigen Tragelemente der Gruppe seitlich versetzt angeordnet und die Riemenförderer der Waagen entsprechend seitlich versetzt angeordnet sind, so daß jeder Riemenförderer jeder Waage jeweils in Förderrichtung zu einer Führung der der betreffenden Waage zugeordneten Förderelemente fluchtet.

Eine weitere erfindungsgemäße Ausgestaltung hat gegenüber der vorgenannten den Vorteil, daß sämtliche Tragelemente völlig gleich ausgebildet werden können, und daß dennoch von jeder Waage der Wiegeeinrichtung jeweils nur ein Förderelement einer Gruppe von (gleichen) Förderelementen gewogen wird, während die anderen Förderelemente der Gruppe diese Waage frei passieren und lediglich mit der ihnen jeweils zugeordneten Waage in Eingriff kommen. Diese Ausgestaltung zeichnet sich dadurch aus, daß die Höhe der Riemen der Riemenförderer jeweils an ihrer den Umlenkrollen abgekehrten Außenseite an einem Stützabschnitt, dessen Länge im wesentlichen gleich der Länge eines Tragelementes ist, auf eine solche Höhe vergrößert ist, daß ein Tragelement in seiner angehobenen Wiegestellung an seiner Unterseite von dem Stützabschnitt abzustützen ist, und daß die Riemenförderer jeder Waage mit dem ihm zugeordneten Förderelement jeder Gruppe von Förderelementen so synchronisiert sind, daß sich die Stützabschnitte seiner beiden Riemen gerade am Auflaufende befinden, wenn das betreffende Förderelement den Riemenförderer der ihm zugeordneten Waage erreicht.

Um eine ungewollte Relativbewegung der Tragelemente relativ zu ihrer jeweiligen Stützeinrichtung (und damit unnötigen Verschleiß und Geräuschbildung) während des Transportes außerhalb des Wiegebereiches zu verhindern, werden die Tragelemente bevorzugt an einer Verriegelungsstation in ihrer normalen Transportstellung verriegelt und an einer der Wiegeeinrichtung vorgeordneten Entriegelungsstation entriegelt, wie dieses weiter unten an einem Ausführungsbeispiel erläutert ist.

Weiterhin kann zwischen der Entriegelungsstation und der Wiegeeinrichtung eine Anhebestation und/oder zwischen der Wiegeeinrichtung und der Verriegelungsstation eine Absenkstation für die Tragelemente vorgesehen sein, mittels welcher die Tragelemente jeweils bereits vor der Wiegeeinrichtung auf das Abstützniveau der Riemenförderer in ihre Wiegestellung anzuheben bzw. erst hinter der Wiegeeinrichtung wieder in die die normale Transportstellung abzusenken sind, so daß die Wiegeeinrichtung von Auf- bzw. Ablaufstößen im wesentlichen verschont bleibt.

Die Waagen der Wiegeeinrichtung können in Förderrichtung hintereinander angeordnet sein. Sie können gemäß einer anderen Ausgestaltung jedoch auch so angeordnet sein, daß ihre Riemenförderer im Bereich des Förderstranges - quer zur Förderrichtung gesehen - im wesentlichen fluchtend hintereinander liegen. Diese Ausgestaltung, bei welcher die Riemenförderer sämtlicher Waagen der Wiegeeinrichtung mithin mit gegenseitigem Abstand parallel nebeneinander liegen, ist besonders zweckmäßig, wenn die Wiegeeinrichtung aufgrund der vorgegebenen Verhältnisse möglichst kurz sein soll/muß. Dabei sind die Riemenförderer paarweise nach innen zueinander versetzt indem die beiden Riemenförderer einer ersten Waage jeweils im Bereich eines äußeren Längsrandes des Förderstranges liegen, die beiden Riemenförderer der nächsten Waage jeweils zu dem benachbarten Riemenförderer der ersten Waage nach innen versetzt sind etc., und die beiden Riemenförderer der letzten Waage mihin ganz innen nebeneinander liegen.

Weitere bevorzugte Ausgestaltungen der vorliegenden Erfindung sind in den Unteransprüchen beschrieben und anhand von Ausführungsbeispielen unter Bezugnahme auf eine Zeichnung erläutert. Diese zeigt in
- Fig. 1: eine sehr vereinfachte, schematische Draufsicht auf einen Sorter;
- Fig. 2: eine etwas vereinfachte teilweise Seitenansicht auf eine erste Ausgestaltung eines erfindungsgemäßen Sorter im Bereich seiner Wiegeeinrichtung, wobei die einzelnen Waagen der Wiegeeinrichtung in Förderrichtung hintereinander angeordnet sind;
- Fig. 3: Schnittansichten a), b), c) und d) gemäß den Schnittlinien IIIa - IIIa bzw. IIIb - IIIb bzw. IIIc - IIIc bzw. IIId - IIId in Fig. 2, wobei jeweils im linken oberen Teil die Ansicht des Tragelementes des nachfolgenden Förderelementes dargestellt ist;
- Fig. 4: eine Fig. 2 entsprechende Darstellung einer Ausgestaltung gemäß den Fig. 2 und 3, bei welcher die Riemenförderer und damit die Wiegestrecken der einzelnen Waagen quer zur Förderrichtung gesehen parallel hintereinander liegen, in vereinfachter/ schematisierter Darstellung;
- Fig. 5: eine vereinfachte Ausschnittsdarstellung der Anordnung gemäß Fig. 4 in Richtung der Schnittlinie IV-IV in Fig. 4 gesehen;
- Fig. 6: eine gegenüber den Fig. 2 bis 5 vergrößerte Querschnitt-Teildarstellung eines Riemenförderers der Wiegeeinrichtung gemäß den Fig. 2 bis 5;
- Fig. 7: eine vereinfachte teilweise Seitenansicht einer anderen Ausgestaltung des erfindungsgemäßen Sorters im Bereich seiner Wiegeeinrichtung, wobei sämtliche Tragelemente gleiche ausgebildet sind;
- Fig. 8: eine Querschnittsansicht des Sorters gemäß Fig. 7 in Richtung der Schnittlinie VIII-VIII in Fig. 7 gesehen;
- Fig. 9: eine vereinfachte teilweise Schnittansicht auf einen Riemenförderer der in den Fig. 7 und 8 verwendeten Wiegeeinrichtung; und
- Fig. 10: eine gegenüber Fig. 9 vergrößerte Querschnitt-Teildarstellung eines Riemenförderers der Wiegeeinrichtung gemäß den Fig. 7 bis 9.

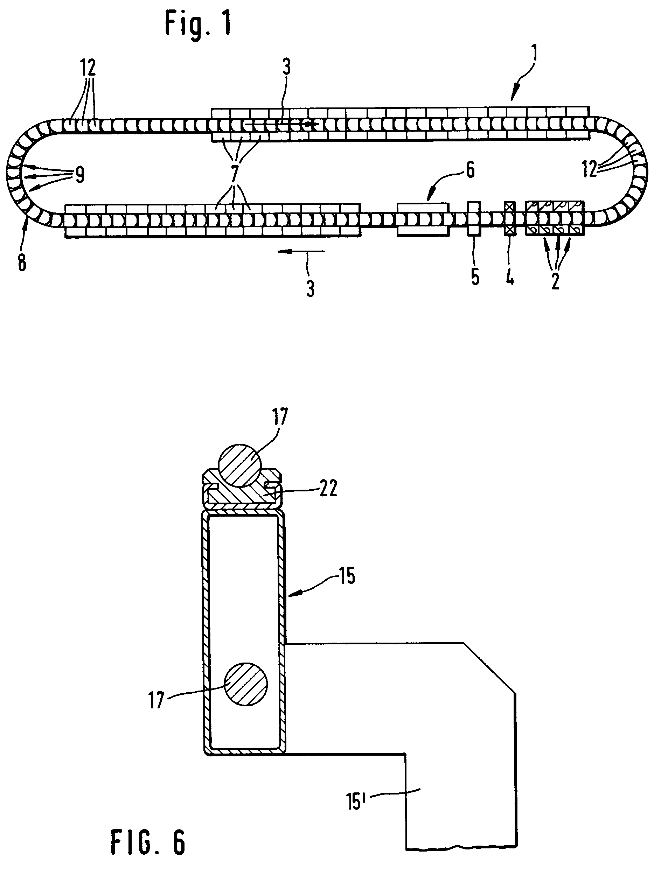

Fig. 1 zeigt eine stark schematisierte Draufsicht auf einen im ganzen mit 1 bezeichneten Sorter zum Sortieren von nicht dargestellten Stückgutteilen, die an diversen Aufgabestellen 2 auf den Sorter aufgegeben werden, wobei die Aufgabe entweder von Hand oder durch (nicht dargestellte) Aufgabevorrichtungen erfolgen kann.

In Förderrichtung 3 ist der letzten Aufgabestelle 2 eine Lesestation 4 (Scanner) nachgeordnet, in welcher die Codierungen der aufgegebenen Stückgutteile zu lesen sind. Die Informationen werden an einen Rechner weitergeleitet, der u. a. die Information erhält, an welcher Stelle des Sorters 1 ein bestimmtes Stückgutteil aufgegeben worden ist, und daher im Zusammenhang mit den übrigen ihm vermittelten Daten wie der Fördergeschwindigkeit eine Wegverfolgung für jedes aufgegebene Stückgutteil vornehmen kann.

Der Lesestation 4 ist in Förderrichtung 3 eine Volumen-Meßeinrichtung 5 zum Bestimmen der Volumenabmessungen jedes aufgegebenen Stückgutteils und dieser eine im ganzen mit 6 bezeichnete, aus mehreren Waagen 14 bestehende, elektrische Wiegeeinrichtung nachgeordnet, in welcher das Gewicht der einzelnen Stückgutteile ermittelt wird, wie nachstehend noch im einzelnen beschrieben wird. Die Volumen- und Gewichtsdaten werden ebenfalls dem Rechner zugeleitet, der sie in geeigneter Weise dem jeweiligen Stückgutteil zuordnet.

Hinter der Wiegeeinrichtung 6 befinden sich zahlreiche Abgabestellen 7, wobei jedes Stückgutteil an einer bestimmten Abgabestelle 7 abzugeben ist, die in seiner Codierung festgelegt ist.

Der Sorter 1 besitzt einen endlosen, angetriebenen Förderstrang 8, der aus einer Vielzahl von gelenkig miteinander verbundenen Förderelementen 9 besteht, die jeweils ein über eine Stützeinrichtung 10 an einer Führung 11 abgestütztes Tragelement 12 mit einer im Förderzustand im wesentlichen horizontalen Tragfläche 13 zum Abstützen eines Stückgutteils aufweisen, welches durch seitliches Kippen des Tragelementes 12 an der vorgegebenen Abgabestelle 7 abzugeben ist. Das Kippen wird jeweils durch eine nicht dargestellte Kippeinrichtung bewirkt, die an der vorgegebenen Abgabestelle 7 von einer Steuerung ausgelöst wird, die vom Rechner eine entsprechende Information erhält und ein entsprechendes Kippsignal erzeugt.

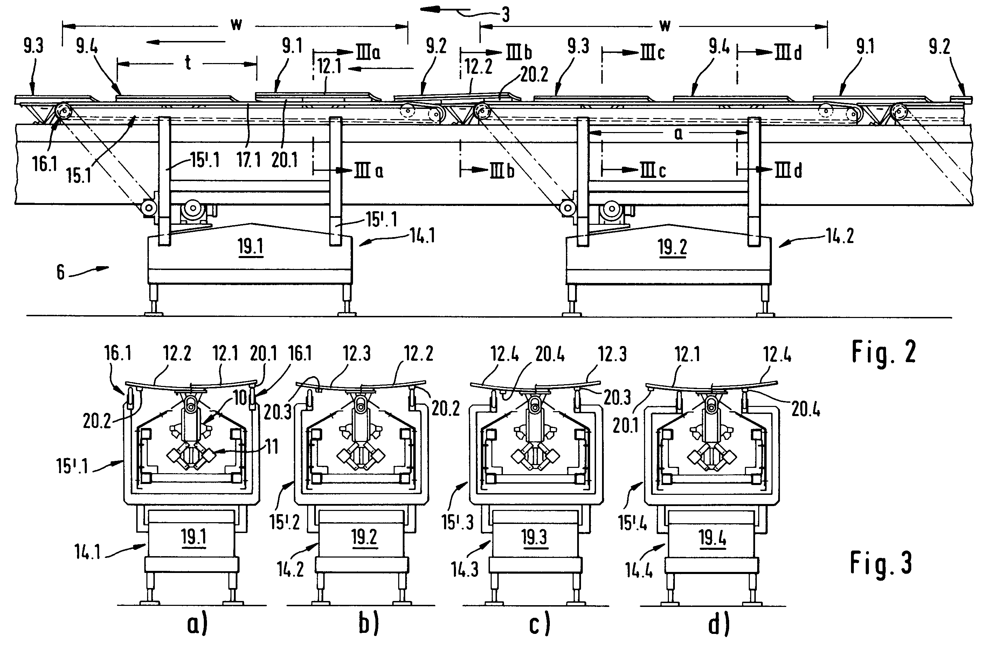

Bei den Ausgestaltungen gemäß den Fig. 2 - 6 besteht die dem Förderstrang 8 zugeordnete Wiegeeinrichtung 6 aus n = 4 Waagen 14 (= 14.1-14.4), die jeweils eine Wiegestrecke w aufweisen, die länger als der Teilungsabstand t zwischen zwei einander benachbarten Förderelementen 9 ist, wobei in Fig. 2 nur zwei Waagen 14.1. und 14.2 dargestellt sind. Der Förderstrang 8 besteht aus aufeinanderfolgenden Gruppen von jeweils n = 4 Förderelementen 9.1, 9.2, 9.3 und 9.4, die jeweils so ausgebildet sind, daß das erste Förderelement 9.1 jeder Gruppe nur mit der ersten Waage 14.1, das zweite Förderelement 9.2 nur mit der zweiten Waage 14.2 etc. und das letzte Förderelement 9.4 der Gruppe 4 nur mit der vierten Waage 14.4 der Wiegeeinrichtung 6 in wiegetechnischen Eingriff kommt, während die Förderelemente 9 jeweils an den anderen Waagen 14 der Wiegeeinrichtung 6 frei durchlaufen. Wie dieses bewirkt wird, wird weiter unten beschrieben.

Die Waagen 14 sind jeweils als Bandwaagen mit jeweils zwei mit gegenseitigen Horizontalabstand in einem Rahmen 15 angeordneten, synchron zum Förderstrang 8 angetriebenen Riemenförderern 16 ausgebildet, deren endlose Riemen 17 jeweils in einer vertikalen Ebene umlaufen, und die so angeordnet sind, daß ihr Obertrum 18 nach oben über den mit einer Wiegeeinheit 19 verbundenen Rahmen 15 frei vorsteht, so daß sie jeweils mit den ihnen zugeordneten Tragelementen in Eingriff kommen können.

Die Tragelemente 12 der Förderelemente 9 sind jeweils aus ihrer normalen (abgesenkten) Transportstellung relativ zu ihrer Stützeinrichtung 10 begrenzt nach oben in eine Wiegestellung beweglich, in welcher sie von den übrigen Teilen des Förderelementes 9 entkoppelt sind, und weisen jeweils an ihrer Unterseite zwei parallele Führungen 20 zur Aufnahme der Riemen 17 der ihnen jeweils zugeordneten Waage 14 auf, die soweit nach unten vorstehen, daß jedes Tragelement 12 beim Passieren der ihm zugeordneten Waage 14 auf deren Riemenförderer 16, 16 aufläuft und in relativ zu seiner Stützeinrichtung 10 angehobener Wiegestellung von diesem getragen wird, während es an den anderen Waagen der Wiegeeinrichtung 6 frei durchläuft.

Die Führungen 20 jedes Tragelementes 12 jeder Gruppe von Förderelementen 9.1-9.4 sind zu den Führungen 20 der übrigen Förderelemente 9 bzw. deren Tragelemente 12 der Gruppe seitlich versetzt angeordnet, wobei die Riemenförderer 16 der Waagen 14 entsprechend angeordnet sind, so daß jeder Riemenförderer 16 jeder Waage 14 jeweils in Förderrichtung 3 zu einer Führung 20 eines der betreffenden Waage 14 zugeordneten Förderelementes 9 fluchtet.

Um dieses zu verdeutlichen, zeigt Fig. 3a einen Schnitt durch das erste Förderelement 9.1 einer Gruppe von Förderelementen 9.1, 9.2, 9.3 und 9.4 (s. Fig. 2) und zeigt im rechten oberen Teil dessen Tragelement 12.1, während im linken oberen Teil das Tragelement 12.2 des in Förderrichtung 3 nachfolgenden Förderelementes 9.2 dargestellt ist. Es ist erkennbar, daß die Führungen 20.1 des ersten Förderelementes 9.1 jeder Gruppe von Förderelementen 9.1 - 9.4 benachbart zu den Seitenrändern des Tragelementes 12.1 angeordnet sind und die Führungen 20.2 des zweiten Förderelementes 9.2 jeweils so nach innen versetzt sind, daß sie in Förderrichtung 3 gesehen neben den Führungen 20.1 des ersten Förderelementes 9.1 liegen, so daß die Führungen 20.1 nur mit den Riemen des Riemenförderers 16.1 der zugeordneten Waage 14.1 in Eingriff kommen können, während sie an den Riemen 17 der Waagen 14.2-14.4 parallel vorbeilaufen.

In entsprechender Weise ist aus Fig. 3b zu erkennen, daß die Führungen 20.3 wiederum weiter nach innen versetzt angeordnet sind als die Führungen 20.2 etc., und aus Fig. 3d ist zu erkennen, daß die Führungen 20.4 des letzten (vierten) Förderelementes 9.4 der Gruppe wiederum von einer weiteren Gruppe von Förderelementen 9.1-9.4 gefolgt wird, deren erstes Förderelement 9.1 wiederum Führungen 20.1 aufweist, die benachbart zu den Rändern seines Tragelementes 12.1 angeordnet sind etc., so daß sie mit der Waage 14.1 in wiegetechnischen Eingriff kommen kann.

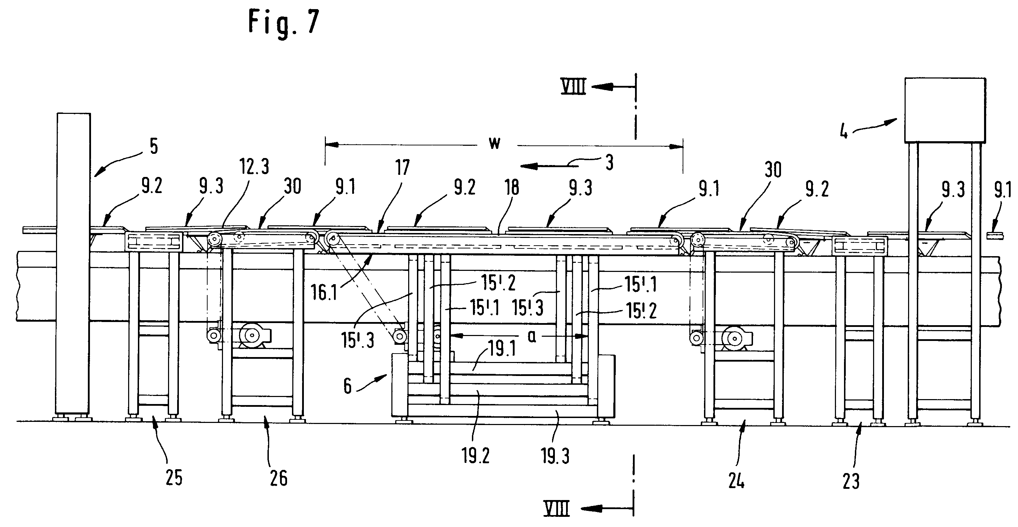

Die Führungen 20 sind jeweils als Kufen ausgebildet, die an ihrer freien Unterseite mit einer durchgehenden Längsnut zur Aufnahme des Riemens 17 eines Riemenförderers 16 ausgebildet sind. Dabei sind die Riemen 17 der Riemenförderer 16 zwischen ihren als Rollen 21 ausgebildeten Umlenkstellen von einer am jeweiligen Waagen-Rahmen 15 befestigten Gleitschiene 22 abgestützt (s. Fig. 6), wobei die Riemen 17 als Rundriemen mit kreisförmigem Querschnitt ausgebildet sind.

Wie sich aus Fig. 3 ergibt, sind die Riemenförderer 16 jeder Waage 14 jeweils an den freien Schenkelenden von zwei im wesentlichen U-förmigen Rahmenabschnitten 15' angeordnet, welche den Sorter 1 umgreifen, und an ihrem unteren Endabschnitt an der betreffenden Wiegeeinheit 19 befestigt sind, also die Rahmenabschnitte 15'.1 an einer Wiegeeinheit 19.1, die Rahmenabschnitte 15'.2 an einer Wiegeeinheit 19.2 etc.

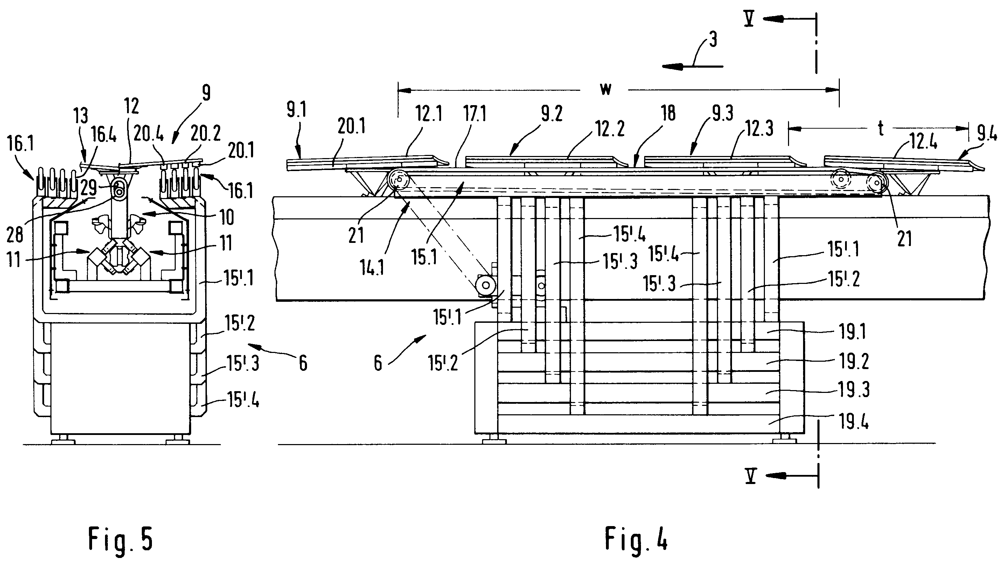

Fig. 2 zeigt eine Ausgestaltung, bei welcher die vier Waagen 14.1 - 14.4 in Förderrichtung 3 hintereinander angeordnet sind, während die Fig. 4, 5 eine Ausbildung zeigen, bei welcher die Waagen 14 der Wiegeeinrichtung 16 so angeordnet sind, daß ihre Riemenförderer 16 - quer zur Förderrichtung 3 gesehen - fluchtend hintereinander liegen, dabei aber in gleicher Weise quer zur Förderrichtung paarweise versetzt zueinander sind wie bei der Ausbildung gemäß den Fig. 2, 3 (s. Fig. 5).

Die Riemenförderer 16 jeder Waage 14 sind mit einem eigenen Antrieb versehen und mithin unabhängig voneinander antreibbar.

In den Fig. 2 und 3 ist ein Zustand dargestellt, bei dem sich das Tragelement 12.1 des vorderen ersten Förderelementes 9.1 einer Gruppe von vier Förderelementen 9.1-9.4 in angehobener Wiegestellung auf den Riemen 17.1 des Riemenförderers 16.1 der in Förderrichtung 3 vornliegenden Waage 14.1 der Wiegeeinrichtung 6 befindet. Die Riemen 17.1 sind jeweils im Bereich der Wiegestrecke w an der ihnen zugeordneten Gleitschiene 22 abgestützt (s. Fig. 6), so daß das Gewicht des Tragelementes 12.1 und des auf ihm ruhenden, nicht dargestellten Stückgutteil über die Rahmenabschnitte 15'.1 an die Wiegeeinheit 19.1 dieser Waage 14.1 übertragen wird. Die Wiegeeinheit 19.1 leitet ein entsprechendes Signal an den nicht dargestellten Rechner weiter, welches dem Bruttogewicht des Tragelementes 12.1 und des auf ihm ruhenden Stückgutteils entspricht. Da das Nettogewicht der Tragelemente 12 vorher bestimmbar und demgemäß bekannt ist, läßt sich hieraus vom Rechner das Nettogewicht des betreffenden Stückgutteils ohne weiteres errechnen.

Dabei ist eine genaue Verwiegung möglich, da die Länge der Wiegestrecke w gleich dem Mehrfachen der Länge der Tragelemente 12 ist, so daß nach dem jeweiligen Auflaufen eines Tragelementes 12 auf die ihm zugeordnete Waage 14 ein großer Beruhigungsweg bzw. -zeitraum zur Verfügung steht, innerhalb dessen die beim Auflaufen entstehende dynamische Stoßbeanspruchung abklingt, und danach eine hinreichend große Gewichtsmeßstrecke.

Die Tragelemente der Förderelemente 9.2-9.4 dieser und jeder weiteren Gruppe von Förderelementen können dagegen mit der Waage 14.1 nicht in wiegetechnischen Eingriff kommen, da ihre (Riemen-)Führungen 20 zu den Riemen 17.1 der ersten Waage 14.1 seitlich versetzt angeordnet sind, so daß sie mit diesen nicht in Eingriff kommen können und demgemäß die Waage 14.1 in ihrer normalen, abgesenkten Förderstellung frei passieren.

Aus Fig. 2 ist weiterhin erkennbar, daß das Tragelement 12.2 des nachfolgenden Förderelementes 9.2 die ihm zugeordnete Waage 14.2 gerade verläßt und dabei aus seiner dort angehobenen Wiegestellung wiederum in seine normale Transportstellung absinkt. Es läuft danach - wie ausgeführt - ebenso wie die Förderelemente 9.3 und 9.4 dieser und jeder nachfolgenden Gruppe von Förderelementen 9 frei durch die erste Waage 14.1 hindurch. In entsprechender Weise laufen die Förderelemente 9.1, 9.3 und 9.4 jeder Gruppe durch die zweite Waage 14.2 hindurch etc., so daß mithin jeweils nur ein einziges Förderelement 9 jeder Gruppe mit seinem Tragelement 12 mit jeder Waage 14 in Eingriff kommt.

Entsprechendes gilt für die Ausgestaltung gemäß den Fig. 4 und 5, bei welcher die einzelnen Waagen 14.1-14.4 der Wiegeeinrichtung 6 quer zur Förderrichtung 3 gesehen im Bereich des Förderstranges 8 fluchtend hintereinanderliegen. In Fig. 4 ist ein Zustand dargestellt, in dem das Tragelement 12.1 des Förderelementes 9.1 einer Gruppe von Förderelementen 9.1-9.4 die Riemen 17.1 der ihm zugeordneten Waage 14.1 gerade verläßt, also aus seiner angehobenen Wiegestellung in seine abgesenkte normale Förderstellung zurückgeführt wird, während das Tragelement 12.4 des letzten Förderelementes 9.4 dieser Gruppe gerade aus seiner abgesenkten normalen Transportstellung in seine angehobene Wiegestellung angehoben wird, und sich die Tragelemente 12.2 und 12.3 der Förderelemente 9.2 bzw. 9.3 in ihrer angehobenen Wiegestellung befinden. Dabei werden aber die Tragelemente 12.2, 12.3 und 12.4 nicht etwa auf den Riemen 17.1 der dem Förderelement 9.1 zugeordneten Waage 14.1 abgestützt, sondern jeweils von den nach innen versetzten Riemen der ihnen zugeordneten Waage 14.2 bzw. 14.3 bzw. 14.4 (s. Fig. 5), die in Fig. 4 nicht erkennbar sind, da sie zur Zeichenebene nach hinten versetzt angeordnet sind, wie dieses aus Fig. 5 hervorgeht, in welcher im oberen rechten Teil die (in Förderrichtung 3 hintereinanderliegenden) Tragelemente 12 jeweils in ihrer Wiegestellung dargestellt und im oberen linken Teil in ihrer abgesenkten normalen Förderstellung angedeutet sind. Dabei sind die Tragelemente 12 jeweils mit einem Zapfen 28 in einem Langloch 29 ihrer Stützeinrichtung 10 geführt.

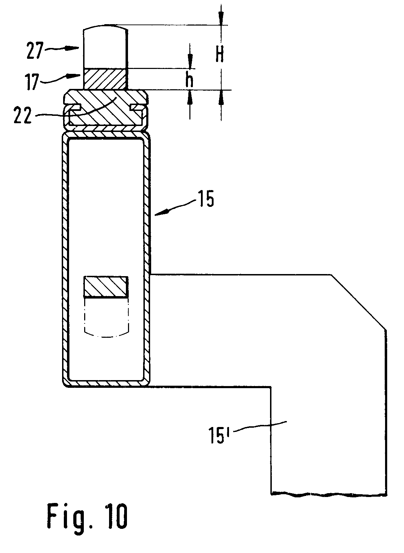

Die Fig. 7 bis 10 zeigen eine Ausgestaltung, die sich von den bisher beschriebenen in mehrfacher Hinsicht unterscheidet, wobei auch hier wie bei der Ausgestaltung gemäß den Fig. 4 und 5 die Waagen 14 der Wiegeeinrichtung 6 nicht wie bei der Ausgestaltung gemäß den Fig. 2 und 3 in Förderrichtung 3 hintereinanderliegen, sondern so angeordnet sind, daß ihre Riemenförderer 16 ineinander verschachtelt quer zur Förderrichtung 3 gesehen hintereinanderliegen.

Bei dieser Ausgestaltung weist jede Gruppe von Förderelementen 9 lediglich n = 3 Förderelemente 9.1-9.3 auf, so daß auch die Wiegeeinrichtung 6 lediglich aus drei Waagen 14 besteht. Die bei gleicher Länge der Förderelemente 9 entsprechend kleinere Wiegestrecke w wird insbesondere dadurch ermöglicht, daß der Wiegeeinrichtung 6 eine Anhebestation 24 unmittelbar vorgeordnet ist, mittels welcher die ankommenden Förderelemente 9 bereits aus ihrer normalen abgesenkten Förderstellung in ihre Wiegestellung angehoben werden, so daß sie von der Anhebestation 24 praktisch stoßfrei auf die Riemen 17 der ihnen jeweils zugeordneten Waage 14 auflaufen, und daher eine kürzere Beruhigungsstrecke ausreicht. Hierfür besitzt die Anhebestation 24 zwei Riemenförderer 30, die mit gegenseitigem Abstand parallel zueinander in Förderrichtung 3 angeordnet sind, wobei sich das Obertrum der Riemenförderer 30 in einer Höhe befindet, die der angehobenen Wiegestellung der Tragelemente 12 entspricht. In Fig. 7 läuft gerade ein Förderelement 9.2 auf die Riemenförderer 30 auf, während sich die Tragelemente der nachfolgenden Förderelemente 9.3, 9.1 etc. noch in ihrer normalen Transportstellung befinden.

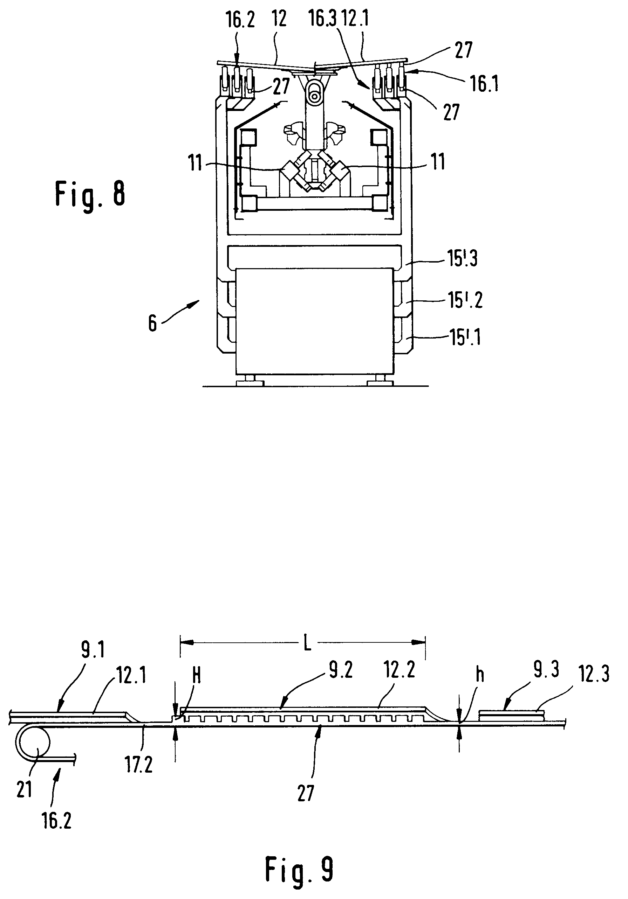

Weiterhin unterscheidet sich der Sorter gemäß den Fig. 7 bis 10 von den oben beschriebenen Ausgestaltungen dadurch, daß sämtliche Förderelemente 9 gleich ausgebildet sind und an ihrer Unterseite nicht mit Riemenführungen 20 versehen sind. Um dennoch zu gewährleisten, daß jedes Förderelement 9 jeder Gruppe von Förderelementen 9.1-9.3 jeweils nur an der ihm zugeordneten Waage 14 der Wiegeeinrichtung 6 gewogen wird und an den übrigen Waagen frei durchlaufen kann, damit jeweils die gewünschte Wiegestrecke w beim Verwiegen zur Verfügung steht, ist die Höhe h der Riemen 17 der Riemenförderer 16 jeweils an ihrer den Umlenkrollen 21 abgekehrten Außenseite an einem Stützabschnitt 27, dessen Länge L im wesentlichen gleich der Länge eines Tragelementes 12 ist, auf eine solche Höhe H vergrößert (s. Fig. 9) das ein mit seiner Unterseite auf den Stützabschnitten 27 aufliegendes Tragelement 12 von den Stützabschnitten 27 in seiner angehobenen Wiegestellung abgestützt wird. Dabei sind die Riemenförderer 16 jeder Waage 14 mit dem ihm jeweils zugeordneten Förderelement 9 jeder Gruppe 9.1-9.3 von Förderelementen so synchronisiert, daß sich die Stützabschnitte 27 seiner beiden Riemen gerade am Auflaufende befinden, wenn das betreffende Förderelement den Riemenförderer 16 der ihm zugeordneten Waage 14 erreicht.

In Fig. 9 ist erkennbar, daß bspw. das Tragelement 12.2 eines Förderelementes 9.2 auf den Stützabschnitten 27 der Riemen 17.2 der Riemenförderer 16.2 der dem Förderelement 9.2 zugeordneten Waage 14.2 in seiner angehobenen Wiegestellung abgestützt ist, während sich das Tragelement 12.1 des vorhergehenden Förderelementes 9.1 und das Tragelement 12.3 des nachfolgenden Förderelementes 9.3 in ihrer abgesenkten Transportstellung befinden, weil sie jeweils außerhalb der Stützabschnitte 27 synchron mit dem Riemenförderer 16.2 laufen. Diese Darstellung wurde indes nur zur Verdeutlichung gewählt und trifft nur dann zu, wenn die einzelnen Waagen 14.1-14.3 der Wiegeeinrichtung 6 in Förderrichtung hintereinander angeordnet sind, wie dieses bei der Ausgestaltung gemäß den Fig. 2 und 3 der Fall ist. Denn bei der Ausgestaltung gemäß Fig. 7, bei welcher die Riemenförderer 16.1-16.3 der Waagen 14.1.-14.3 quer zur Förderrichtung hintereinanderliegen, befindet sich natürlich im Bereich der Waage 6 das Tragelement 12 jedes Förderelementes 9.1-9.3 in angehobener Wiegestellung, aber jeweils auf einer anderen Waage, so daß für jede Waage 14.1-14.3 die volle Wiegestrecke w zur Verfügung steht.

Weiterhin unterscheidet sich die Ausgestaltung gemäß Fig. 7 von den vorstehend erörterten dadurch, daß der Wiegeeinrichtung 6 eine Absenkstation 26 nachgeordnet ist, die ähnlich wie die Anhebestation 24 ausgebildet ist. Auch die Absenkstation 26 weist Riemenförderer 30 auf, welche die Tragelemente 12 jeweils noch in angehobener Wiegestellung von der Wiegeeinrichtung 6 übernehmen, damit es auch beim Ablauf nicht zu dynamischen Stößen auf die Wiegeeinrichtung 6 kommt. Der in Förderrichtung 3 vornliegende Abschnitt der Riemenförderer 30 der Absenkstation 27 ist etwas nach unten abgeknickt, so daß ein von der Absenkstation 26 ablaufendes Tragelement 12 (in Fig. 7 das Tragelement 12.3 eines Förderelementes 9.3) wieder in seine abgesenkte normale Transportstellung überführt wird. Die Riemenförderer 30 der Anhebestation 24 sind spiegelsymmetrisch dazu ausgebildet.

Der Absenkstation 26 ist eine Verriegelungsstation 25 in Förderrichtung 3 nachgeordnet, an welcher das Tragelement 12 eines von der Absenkstation 26 abgelaufenen Förderelementes 9 mit dessen Stützeinrichtung 10 verriegelt wird. Dieses kann auf vielfältige Weise, bspw. durch Betätigung einer Verriegelungslasche, eines Verriegelungsbolzens od. dgl. erfolgen. Diese Maßnahme hat sich als zweckmäßig herausgestellt, damit es während des normalen Transportes außerhalb der Wiegeeinrichtung 6 nicht aufgrund von Relativbewegungen zwischen Tragelement 12 und Stützeinrichtung 10 zu unnötigem Verschleiß und einer Geräuschbildung kommt.

Es ist daher der Anhebestation 24 eine Entriegelungsstation 23 unmittelbar vorgeordnet, in welcher die Verriegelung wieder aufgehoben wird, damit das Tragelement 12 des jeweiligen Förderelementes 9 relativ zu seiner Stützeinrichtung 10 in die angehobene Wiegestellung überführt werden kann.

Vor der Entriegelungsstation 23 befindet sich die Lesestation 4 zum Lesen der Codierung der nicht dargestellten Stückgutteile, und hinter der Verriegelungsstation 25 befindet sich eine Volumen-Meßeinrichtung 5, mittels welcher die jeweiligen Abmessungen eines durchlaufenden Stückgutteils zu bestimmen sind, wobei auch diese Daten an den nicht dargestellten Rechner weitergeleitet und dort dem jeweiligen Stückgutteil zugeordnet werden.

Aus der gegenüber Fig. 7 vergrößerten Querschnittsdarstellung gemäß Fig. 8 ist zu erkennen, daß bei der Ausbildung gemäß Fig. 7 zwar die in Förderrichtung 3 hintereinanderliegenden Tragelemente 12.1-12.3 gleichzeitig verwogen werden, daß dieses aber jeweils an einer anderen Waage der Wiegeeinrichtung 6 erfolgt (s. Fig. 8 oben rechts). Dabei sei noch erwähnt, daß die Riemen 17 der Riemenförderer 16 der einzelnen Waagen 14 ggf. jeweils auch mit zwei oder mehr mit gegenseitigem Abstand zueinander angeordneten Stützabschnitten 27 versehen sein können, wie dieses in Fig. 8 oben rechts angedeutet ist. Dieses hängt von der Länge der Riemenförderer 16 und dem Teilungsabstand t zwischeneinander benachbarten Förderelementen 9 ab. Wichtig ist, daß die Ausbildung so gewählt wird, daß synchron mit einem von der Anhebestation 24 in die Wiegeeinrichtung 6 einlaufenden Förderelement 9 am Auflaufende der betreffenden Waage 14 jeweils Stützabschnitte 27 ihrer Riemen 17 einlaufen, wenn das betreffende Tragelement 12 der betreffenden Waage 14 zum Verwiegen zugefördert wird.

Der Vollständigkeit halber sei noch erwähnt, daß in Fig. 8 oben links die hintereinanderliegenden Tragelemente 12 in ihrer abgesenkten normalen Förderstellung angedeutet sind, und daß dort die Riemenförderer 16 in einem Zustand gezeigt sind, in dem sich ihre Stützabschnitte 27 nicht im Eingriff mit Tragelementen 12 befinden. Dieser Zustand ergibt sich, wie ausgeführt - bei der Ausbildung gemäß Fig. 7 im Bereich der Wiegeeinrichtung 6 nicht, sondern nur dann, wenn die Waagen 14 die bei der Ausgestaltung gemäß Fig. 2 in Förderrichtung 3 hintereinander angeordnet sind, da bei der Ausgestaltung gemäß Fig. 7 sämtliche im Bereich der Wiegeeinrichtung 6 befindlichen Tragelemente 12 mit den auf ihnen befindlichen Stückgutteilen in angehobener Wiegestellung sind.

Es sei noch nachgetragen, daß bei der Ausgestaltung gemäß Fig. 7 (wie bei der Ausgestaltung gemäß Fig. 3 und anders als bei der Ausgestaltung gemäß Fig. 4) die Rahmenabschnitte 15' jeder Waage 14 jeweils den gleichen Abstand a zueinander haben, was sich bei gleicher Ausbildung der Wiegeeinheiten 19 als zweckmäßig herausgestellt hat.

Es ist ohne weiteres erkennbar, daß aufgrund der erfindungsgemäßen Ausbildung die auf den Sorter 1 aufgegebenen Stückgutteile auch bei einer Vielzahl von Aufgabestellen 2 mit nur einer einzigen Wiegeeinrichtung 6 mit großer Genauigkeit zu verwiegen sind, da die Länge der Wiegestrecke w unabhängig von der Länge der Tragelemente gewählt werden kann und i. a. dem Mehrfachen der Teilung t zwischen einander benachbarten Förderelementen 9 gewählt wird, so daß jeweils beim Verwiegen eine hinreichend große Beruhigungs- und Gewichtsmeßstrecke zur Verfügung steht, über welche das Gewicht mit hoher Genauigkeit zu bestimmen ist. Dabei ist es dennoch möglich, jedes Stückgutteil zu verwiegen, weil die einzelnen Waagen 14 der Wiegeeinrichtung 6 jeweils nur von einem Förderelement 9 einer Gruppe und dem auf diesem aufliegenden Stückgutteil beaufschlagt werden, während die nachfolgenden Förderelemente der Gruppe an der betreffenden Waage 14 vorbeilaufen, ohne diese in irgendeiner Weise zu beeinflussen, und zwar unabhängig davon, ob die einzelnen Waagen 14 der Wiegeeinrichtung 6 in Förderrichtung 3 des Sorters 1 hintereinander angeordnet sind oder gleichsam so "zusammengeschoben" sind daß ihre Riemenförderer 16 quer zur Förderrichtung 3 gesehen fluchtend hintereinander liegen.

### BEZUGSZEICHENLISTE

- 1: Sorter
- 2: Aufgabestellen
- 3: Förderrichtung (von 1)
- 4: Lesestation
- 5: Volumen-Meßeinrichtung
- 6: Wiegeeinrichtung
- 7: Abgabestellen
- 8: Förderstrang (von 1)
- 9: Förderelemente
- 10: Stützeinrichtung (von 9)
- 11: Führung
- 12: Tragelement
- 13: Tragfläche (von 12)
- 14: Waagen
- 15: Rahmen
- 15': U-förmige Rahmenabschnitte
- 16: Riemenförderer
- 17: Riemen (von 16)
- 18: Obertrum (von 16)
- 19: Wiegeeinheit
- 20: (Riemen-)Führungen
- 21: Umlenkrollen
- 22: Gleitschiene
- 23: Entriegelungsstation
- 24: Anhebestation
- 25: Verriegelungsstation
- 26: Absenkstation
- 27: Stützabschnitt (von 17)
- 28: Zapfen
- 29: Langloch
- 30: Riemenförderer

## Patentansprüche

1. Stückgutförderer (Sorter) (1) zum Sortieren von codierten stückgutteilen, mit einem angetriebenen, endlosen Förderstrang (8), der aus einer Vielzahl von gelenkig miteinander verbundenen, längs einer Führung (11) beweglichen Förderelementen (9) besteht, die jeweils ein über eine Stützeinrichtung (10) an der Führung (11) abgestütztes Tragelement (12) mit einer im Förderzustand im wesentlichen horizontalen Tragfläche (13) für ein Stückgutteil aufweisen, welches an einer vorgegebenen Abgabestelle (7) von mehreren längs der Förderstrecke vorhandenen Abgabestellen (7) z. B. durch seitliches Kippen des Tragelementes (12) abzugeben ist; mit mehreren Aufgabestellen (2), an welchen zu sortierende Stückgutteile jeweils einzeln auf die Tragfläche (13) eines freien Förderelementes (9) aufzugeben sind; und mit einem Rechner, dem die von einer Leseeinrichtung gelesenen Codeinformationen der aufgegebenen Stückguteile zugeleitet werden, dadurch gekennzeichnet, daß die Tragelemente (12) jeweils aus ihrer normalen Transportstellung relativ zu ihrer Stützeinrichtung (10) nach oben in eine Wiegestellung beweglich sind; daß dem Förderstrang (8) vor der ersten Abgabestelle (2) eine aus n elektrischen Waagen (14) bestehende, ortsfeste Wiegeeinrichtung (6) zugeordnet ist; daß die Waagen (14) jeweils eine Wiegestrecke (w) aufweisen, die länger ist als der Teilungsabstand (t) zwischen zwei einander benachbarten Förderelementen (9); und daß der Förderstrang (8) aus aufeinander folgenden Gruppen von jeweils n Förderelementen (9.1 - 9.4) besteht, von denen das erste Förderelement (9.1) jeder Gruppe nur mit einer ersten Waage (14.1), das zweite Förderelement (9.2) nur mit einer zweiten Waage (14.2) etc. und das n-te Förderelement (9.4) nur mit der n-ten Waage (14.4) der Wiegeeinrichtung (6) in wiegetechnischen Eingriff kommt, während die Förderelemente (9) jeweils an den anderen Waagen (14) der Wiegeeinrichtung (6) frei durchlaufen.

2. Stückgutförderer nach Anspruch 1, dadurch gekennzeichnet, daß die Länge der Wiegestrecke (w) jeder Waage (14) gleich dem Mehrfachen des Teilungsabstandes (t) der Förderelemente (9) ist.

3. Stückgutförderer nach Anspruch 1 oder 2, dadurch gekennzeichnet, daß die Tragelemente (12) in ihrer abgesenkten normalen Transportstellung gegen ein vertikales Anheben relativ zu ihrer Stützeinrichtung (10) verriegelt sind.

4. Stückgutförderer nach Anspruch 3, dadurch gekennzeichnet, daß der Wiegeeinrichtung (6) eine Entriegelungsstation (23) vorgeordnet ist, an welcher die Tragelemente (12) der Förderelemente (9) jeweils von ihrer Stützeinrichtung (10) zu entriegeln sind.

5. Stückgutförderer nach Anspruch 4, dadurch gekennzeichnet, daß zwischen der Entriegelungsstation (23) und der Wiegeeinrichtung (6) eine Anhebestation (24) angeordnet ist, an welcher die Tragelemente (12) jeweils bereits vor dem Erreichen der Wiegeeinrichtung (6) aus ihrer abgesenkten Transportstellung in ihre Wiegestellung anzuheben sind.

6. Stückgutförderer nach einem oder mehreren der Ansprüche 3 bis 5, dadurch gekennzeichnet, daß der Wiegeeinrichtung (6) eine Verriegelungsstation (25) nachgeordnet ist, an welcher die aus ihrer angehobenen Wiegestellung wieder in ihre Transportstellung abgesenkten Tragelemente (12) jeweils wieder mit ihrer Stützeinrichtung (10) zu verriegeln sind.

7. Stückgutförderer nach Anspruch 6, dadurch gekennzeichnet, daß zwischen der Wiegeeinrichtung (6) und der Verriegelungsstation (25) eine Absenkstation (26) angeordnet ist, an welcher die Tragelemente (12) jeweils erst nach dem Verlassen der Wiegeeinrichtung (6) aus ihrer angehobenen Wiegestellung in ihre normale Transportstellung abzusenken sind.

8. Stückgutförderer nach einem oder mehreren der Ansprüche 1 bis 7, dadurch gekennzeichnet, daß die Waagen (14) als Bandwaagen mit jeweils zwei mit gegenseitigem Horizontalabstand in einem Rahmen (15) angeordneten, synchron zum Förderstrang (8) angetriebenen Riemenförderern (16) ausgebildet sind, deren endlose Riemen (17) jeweils in einer vertikalen Ebene umlaufen und so angeordnet sind, daß ihr Obertrum (18) nach oben über den mit einer Wiegeeinheit (19) verbundenen Rahmen (19) frei vorsteht.

9. Stückgutförderer nach Anspruch 8, dadurch gekennzeichnet, daß die Tragelemente (12) jeweils an ihrer Unterseite mit zwei Führungen (20) zur Aufnahme der Riemen (17) der ihnen jeweils zugeordneten Waage (14) versehen sind, die so weit nach unten vorstehen, daß das Tragelement (12) beim Passieren der ihm zugeordneten Waage (14) auf deren Riemenförderer (16) aufläuft und in seiner relativ zu seiner Stützeinrichtung (10) angehobenen Wiegestellung von dessen Riemen (17) getragen wird, wobei die Führungen (20) jedes Tragelementes (12) jeder Gruppe von Förderelemeten (9) zu den Führungen (20) der übrigen Tragelemente (12) der Gruppe seitlich versetzt angeordnet sind, und wobei die Riemenförderer (16) der Waagen (14) entsprechend seitlich versetzt zueinander angeordnet sind, so daß jeder Riemenförderer (16) jeder Waage (14) jeweils in Förderrichtung (3) zu einer Führung (20) eines der betreffenden Waage (14) zugeordneten Förderelementes (9) fluchtet (Fig. 2-6).

10. Stückgutförderer nach Anspruch 9, dadurch gekennzeichnet, daß die Führungen (20.1) des ersten Förderelementes (9.1) jeder Gruppe von Förderelementen (9.1 - 9.4) benachbart zu den Seitenrändern des betreffenden Tragelementes (12.1) angeordnet sind, die Führungen (20.2) des zweiten Förderelementes (9.2) jeweils so nach innen versetzt sind, daß sie in Förderrichtung (3) gesehen neben den Führungen (20.1) des ersten Förderelementes (9.1) liegen etc.

11. Stückgutförderer nach Anspruch 9 oder 10, dadurch gekennzeichnet, daß die Führungen (20) als Kufen ausgebildet sind, die an ihrer freien Unterseite mit einer durchgehenden Längsnut zur Aufnahme des Riemens (17) eines Riemenförderers (16) ausgebildet sind.

12. Stückgutförderer nach Anspruch 8, dadurch gekennzeichnet, daß die Höhe (h) der Riemen (17) der Riemenförderer (16) jeweils an ihrer den Umlenkrollen (21) abgekehrten Außenseite an einem Stützabschnitt (27), dessen Länge (L) im wesentlichen gleich der Länge eines Tragelementes (12) ist, auf eine solche Höhe (H) vergrößert ist, daß ein Tragelement (12) in seiner angehobenen Wiegestellung an seiner Unterseite von dem Stützabschnitt (27) abzustützen ist; und daß die Riemenförderer (16) jeder Waage (14) mit dem ihm zugeordneten Förderelement (9) jeder Gruppe (9.1, 9.2 ...) von Förderelementen so synchronisiert sind, daß sich die Stützabschnitte (27) seiner beiden Riemen (17) gerade am Auflaufende befinden, wenn das betreffende Förderelement (9) den Riemenförderer (16) der ihm zugeordneten Waage (14) erreicht (Fig. 7-10).

13. Stückgutförderer nach Anspruch 12, dadurch gekennzeichnet, daß die Riemen (17) im Bereich ihres Stützabschnittes (27) als Zahnriemen ausgebildet sind.

14. Stückgutförderer nach einem oder mehreren der Ansprüche 8 bis 13, dadurch gekennzeichnet, daß die Riemen (17) der Riemenförderer (16) zwischen ihren Umlenkstellen (21) jeweils von einer am Waagen-Rahmen (15) befestigten Gleitschiene (22) abgestützt sind.

15. Stückgutförderer nach einem oder mehreren der Ansprüche 8 bis 14, dadurch gekennzeichnet, daß die Riemenförderer (16) einer Waage (14) jeweils an den oberen freien Schenkelenden von im wesentlichen U-förmigen Rahmenabschnitten (15') angeordnet sind, welche den Sorter (1) umgreifen und an ihrem unteren Endabschnitt an einer Wiegeeinheit (19) der Waage (14) befestigt sind.

16. Stückgutförderer nach Anspruch 15, dadurch gekennzeichnet, daß die Riemenförderer (16) der Waagen (14) jeweils mit zwei Rahmenabschnitten (15') an der betreffenden Wiegeeinheit (19) der Waage (14) abgestützt sind, wobei der gegenseitige Horizontalabstand (a) der Rahmenabschnitte (15') bei allen Waagen (14) gleich groß ist.

17. Stückgutförderer nach einem oder mehreren der Ansprüche 8 bis 16, dadurch gekennzeichnet, daß die Riemenförderer (16) jeder Waage (14) mit einem eigenen Antrieb versehen sind.

18. Stückgutförderer nach einem oder mehreren der vorhergehenden Ansprüche, dadurch gekennzeichnet, daß jede Gruppe von Förderelementen (9) aus wenigstens 3 Förderelementen besteht.

19. Stückgutförderer nach einem oder mehreren der vorhergehenden Ansprüche, dadurch gekennzeichnet, daß die Waagen (14) der Wiegeeinrichtung (6) in Förderrichtung (3) hintereinander angeordnet sind.

20. Stückgutförderer nach einem oder mehreren der Ansprüche 1 bis 17, dadurch gekennzeichnet, daß die Waagen (14) der Wiegeeinrichtung (6) so angeordnet sind, daß ihre Riemenförderer (16) im Bereich des Förderstranges - der zur Förderrichtung (3) gesehen - im wesentlichen fluchtend hintereinander liegen.
